# EUROPEAN PATENT SPECIFICATION

(11) **EP 3 306 001 B1**
(45) Date of publication and mention of the grant of the patent: **10.04.2019**
(21) Application number: 15734740.2
(22) Date of filing: 25.05.2015
(51) Int. Cl.: E04B 1/346, E04H 1/12

(54) **CABIN ROTATABLE 360 DEGREES**
UM 360 GRAD DREHBARE KABINE
CABANE ROTATIVE À 360° SELON UN PLAN ET DANS N'IMPORTE QUEL SENS

(43) Date of publication of application: 11.04.2018
(73) Proprietor: De Alge Cadavez, Telmo Alexandre, 5300-068 Bragança (PT)
(72) Inventor: De Alge Cadavez, Telmo Alexandre, 5300-068 Bragança (PT)
(74) Representative: do Nascimento Gomes, Rui
(86) International application number: PCT/PT2015/000024
(87) International publication number: WO 2016/190764

(56) References cited:
- DE-A1- 1 684 731
- DE-A1-102009 045 492
- DE-C- 167 321
- GB-A- 322 874
- US-A- 1 593 665

## Description

### FIELD OF THE INVENTION

Today, there are numberless lodgement structures with a small dimension, namely the ones aimed for tourist accommodation, comprising small houses or cabins (cabins, shelters, residential caravans, mobile homes, tiny houses, small modular houses, retreats or similar) which can be made up of fixed or mobile structures installed in tourist establishments, specifically in camping sites.

This type of accommodation comprises small, simple structures, positioned in places where they are intensely subjected to environmental conditions (sun, rain, wind).

As these are small-sized structures, their interior is also subjected to temperature fluctuations caused by the incidence of the elements. The entry and exit points, as well as the windows and other openings on these structures are, inevitably, heavily exposed to the elements, thus causing that, during certain times of the day or of the year, the entire structure undergoes undesired temperature fluctuations (too warm or too cold), without any possibility of repositioning the structure according to the variable needs each day and/or each year (depending on the sun's position, the rain and/or wind's direction and also on the specificities of the relevant season).

Due to their tiny dimensions, these accommodation structures often make use of solar energy to heat their water, using thermal solar panels, and also to produce electrical power, using photovoltaic panels. These panels are usually installed in the roofs or rooftops, fixed and directed towards the sun, in the best possible angle in order to maximise its efficiency.

### Background of the invention

The already existing structures (cabins, shelters, residential caravans, mobile homes, tiny houses, small modular houses, retreats or similar) do not allow for the user to turn or rotate this type of accommodation, in each circumstance, to the desired cardinal points, in an easy, fast, dynamic and continuous manner, but only through a repositioning operation that is not only time-consuming, but also complex and expensive (e.g., by lifting and repositioning the structure using a crane or a tow truck with a heavy-duty vehicle in the case of the so-called residential caravans, or mobile homes). This requires an operation that is neither simple nor fast, and imposes additional costs.

On the other hand, these tourist accommodation structures are also connected with the natural environment and the fruition and enjoyment of outer space, as they allow for the users to benefit from nature and landscape. Obtaining a good positioning and a good placement surrounded by nature (e.g. for landscape observation or in order to obtain more shadow and/or sunlight in certain times of the day and of the year) depends exclusively on the placement site of this type of accommodation, which is fixed and static.

Also the performance of the thermal solar panels (to heat the water) and of the photovoltaic panels (to produce electrical power) installed in the roofs or rooftops of this type of accommodation will depend on the best position of the structure (which is fixed and static, as mentioned) according to the sunlight available in each time of the day and/or of each season of the year.

Additionally, the solutions comprised in the state of the art display an integration and wholeness between the mechanism and the structure, as it is not possible to dissociate both of them, namely for transport purposes and subsequent construction, and to allow for modularity.

German patent application DE102009045492 discloses a bearing device for rotating building, having a protective ring arranged between lower and upper part, rings provided with teeth extending over circumference, and a tooth gear driven by the driving device.

British patent GB322874 discloses a an apparatus for the presentation of maximum of sunlight to plants in a greenhouse, comprising a glasshouse which is rotatably arranged upon a support so that it may be rotated in substantial synchronism with the apparent diurnal course of the sun.

### Technical problems and benefits

The present invention fulfils all the aforementioned problems and gaps, as it allows for the cabin to be turned and rotated around 360 degrees, and to be fixed and blocked in any site, presenting the additional advantage of protecting the entrance area and facades against the wind, rain or sunlight, by positioning the structure in the desired cardinal points at each time of the day and/or season.

The present invention also allows for the ideal positioning of the cabin according to the landscape observation points and for its placement entirely amidst nature or amidst the surroundings where the structure is placed. Furthermore, it also allows for the maximisation of the solar harvesting for thermal solar and/or photovoltaic panels installed in its roof or rooftop, as its orientation will be undertaken by repositioning the rotating cabin itself in the best direction at each time of the day and/or in each season.

Therefore, the present invention is regarded as a highly modular technical solution, in which all the elements are separable, allowing for an easier fabrication and subsequent transport and construction, as well as for an easy reparation of any parts or elements.

### Summary of the invention

It is an object of the present invention a cabin which rotates in 360 degrees along one plane and in every direction, comprising:
- one chassis (2);
- one cabin structure (1) mechanically coupled to the chassis (2) surface;
- one round base (4);
- means of connection, mechanically coupled to the centre of the lower surface of the chassis (2);
- actuating means, suitable for moving the chassis (2) on the round base (4);
- one intermediate round structure with rotatable means (3) and that is mechanically coupled to the lower surface of the chassis (2).

This set of characteristics that define the cabin allows for the chassis (2) to rotate around itself, also allowing the coupling of constructions on the chassis. This additionally enables for an easier assembly.

Moreover, the intermediate round structure with rotatable means (3) has the same diameter and is centred in relation to the round base (4). This connection allows for the association of the whole assembly, as the activation of the actuating means will lead to the chassis (2) to be moved on the round base, by the rotatable means (3).

The intermediate round structure with rotatable means (3), having the same diameter and centred in relation to the round base, is an additional advantage in relation to the state of the art, as not only is the present solution highly modular comparing to other known systems, it also solves the problem arising from this type of constructions, involving the potential difficulties when it comes to assembling the structure. By including an intermediate round structure with rotatable means (3), the present technical solution allows for the chassis (2) to be easily mounted on the round base (4) and the rotatable means (3) (which are, in turn, mechanically connected to the intermediate round structure with rotatable means (3)) will be perfectly aligned on the round base (4).

The modularity of the present technical solution does not result, thus, in an additional disadvantage for the construction of a rotating cabin.

In an additional embodiment, the means of connection are fitted in the actuating means.

On the other hand, the actuating means comprise the following components:
- one pivot pin or axle (8) arranged vertically, suitable for being fitted in the connection means and serving as an axle;
- one central sprocket (7), in which the pivot pin or axle (8) is attached, centred on the round base (4) and attached to it;
- locking bars (5) fixed on the round base (4), in which the central sprocket (7) is fixed.

This configuration of the actuating means has an additional detail that allows the association of the whole assembly.

The present invention also comprises the use of the aforementioned rotating cabin in shelters, residential caravans, mobile homes, tiny houses, small modular houses or retreats.

The present invention also relates, in one specific embodiment, to a cabin which can be rotated in 360 degrees, in every direction, and which can be positioned and blocked in every position, by means of a rotating transmission system with an actuating mechanism (12) that can either be manual or automatic, which will rotate a set of wheels attached to the lower part of the cabin's chassis (2), and which roll on a round base (4) supported horizontally on the ground.

### Description of the figures

The present invention is explained in greater detail in the following drawings:
FIG. 1 - General exploded view of the cabin, of the chassis (2) and of the whole rotating system and respective actuating mechanism (12) of the rotating movement;
FIG. 2 - Exploded view of the chassis (2) and respective rotating system and respective actuating mechanism (12) of the rotating movement;
FIG. 3 - Side magnified view detailing the round base (4) and the central system for fitting the cap (10) in the pivot pin or axle (8) which acts as an axle;
FIG. 4 - Lower view of the cabin's chassis (2), of the round base (4) and of the remaining rotating system and actuating mechanism (12);
FIG. 5 - Longitudinal section of the cabin showing the round base (4) and part of the actuating mechanism (12);
FIG. 6 - Magnified view detailing the round base (4) and the transmission chain (11);
FIG. 7 - Magnified view detailing the actuating mechanism (12) and the transmission chain (11);
FIG. 8 - Magnified view detailing the actuating mechanism (12) ;
FIG. 9 - Simple view of the cabin.

### DETAILED DESCRIPTION OF THE INVENTION

As previously mentioned, the present invention relates to a cabin which rotates in 360 degrees along one plane and in every direction, comprising:
- one chassis (2);
- one cabin structure (1) mechanically coupled to the chassis (2) surface;
- one round base (4);
- means of connection, mechanically coupled to the centre of the lower surface of the chassis (2);
- actuating means, suitable for moving the chassis (2) on the round base (4);
- one intermediate round structure with rotatable means (3) and that is mechanically coupled to the lower surface of the chassis (2).

In one additional embodiment, the intermediate round structure with rotatable means (3) has the same diameter and is centred in relation to the round base (4).

In another possible configuration, the rotating means are fixed on the round base (4) and the means of connection are fitted on the actuating means. This connection allows for the association of the whole assembly, as the activation of the actuating means will lead to the chassis (2) to be moved on the round base, by the rotatable means (3).

In another configuration, the actuating means comprise the following components:
- one pivot pin or axle (8) arranged vertically, suitable for being fitted in the connection means and serving as an axle;
- one central sprocket (7), in which the pivot pin or axle (8) is attached, centred on the round base (4) and attached to it;
- locking bars (5) fixed on the round base (4), in which the central sprocket (7) is fixed.

On the other hand, the connection means consist of a round flange (9) with a cap (10), and the cap (10) is fixed on the centre of the lower surface of the round flange (9). This particular configuration of the present invention allows for a connection between the actuating means, between the connection means and the chassis (2), conveying the rotational movement along the cabin.

Therefore, the aforementioned cap (10) is fitted on the pivot pin or axle (8) serving as an axis of rotation for the entire chassis (2) that rotates along the perimeter of the above mentioned round base (4) using a set of wheels.

Additionally, in one detailed configuration, the actuating means of the rotation movement comprise:
- one smaller sprocket (13);
- one transmission chain (11) with one end connected to the central sprocket (7) and the other end connected to the smaller sprocket (13);
- one vertical axle (14) mechanically connected to the smaller sprocket (13).

This way, the rotating movement is activated through a transmission chain (11) with one end connected to the central sprocket (7) and with the other end connected to another smaller sprocket (13) fitted in the actuating mechanism (12) attached on the cabin's chassis (2).

As for the activation mechanism of the whole assembly, the present invention comprises, in a detailed configuration, one vertical axle (14) that, in turn, has a vertical bevel gear (15) in its upper end attached to another horizontal bevel gear (16) that, in turn, is mechanically connected to an actuating mechanism (12) that can either be manual or automatic.

Such configuration allows for the whole assembly to start moving.

In a configuration devoted to the attachment of the whole assembly on the ground, as well as to the determination of the height of the assembly from the ground, the cabin of the present invention has a plurality of telescopic flanged spurs (6) suitable for support and fixation on the ground, mechanically connected to the round base (4). The telescopic flanged spurs (6) also allow for the levelling of the rotating cabin.

Preferably, the telescopic flanged spurs (6) are evenly spaced along the round base (4).

The present invention is also related to the use of the rotating cabin in the aforementioned possible configurations - and possibly complemented by the following embodiments - in shelters, residential caravans, mobile homes, tiny houses, small modular houses or retreats.

### PREFERRED EMBODIMENTS

In an embodiment of the present invention, the round base (4) is tubular.

In another embodiment of the present invention, the actuating means are arranged on the chassis (2).

In a preferred embodiment of the present invention, the cabin's structure (1) consists of a shelter, a residential caravan, a mobile home, a tiny house, a small modular house or a retreat.

In an embodiment of the present invention, the rotatable means (3) consist of a plurality of evenly spaced wheels.

In another embodiment of the present invention, the round base (4) is a tubular base.

Depending on the environment's characteristics and on the desired solution, the cabin's structure (1) and the chassis (2) may comprise one of the following materials: metal, plastic or wood or wood-based materials.

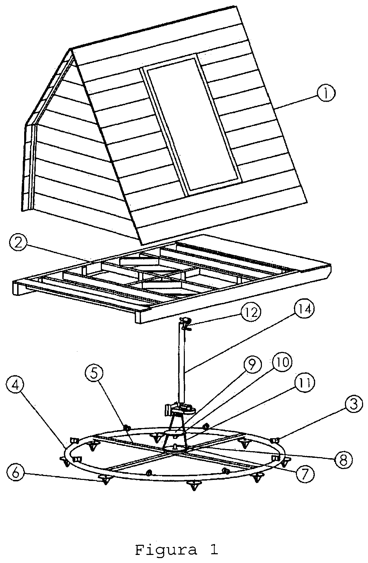

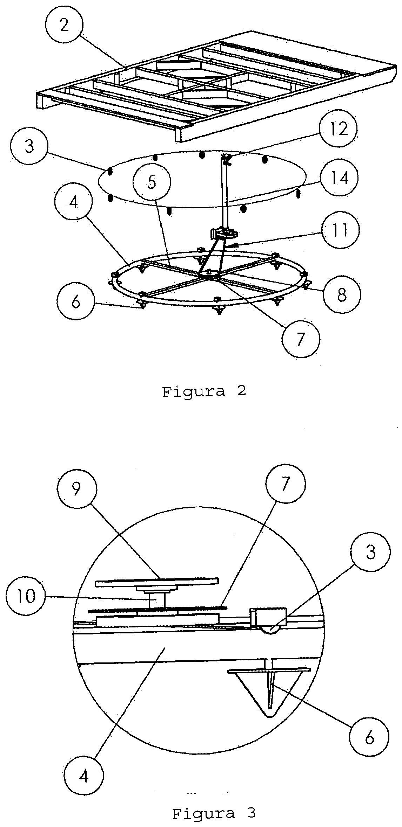

With reference to the Figures, a preferred embodiment of the invention is disclosed. Fig. 1 and Fig 2 show the cabin's structure (1), the chassis (2) of a cabin and generally the entire rotating system and respective actuating mechanism (12) of the rotating movement.

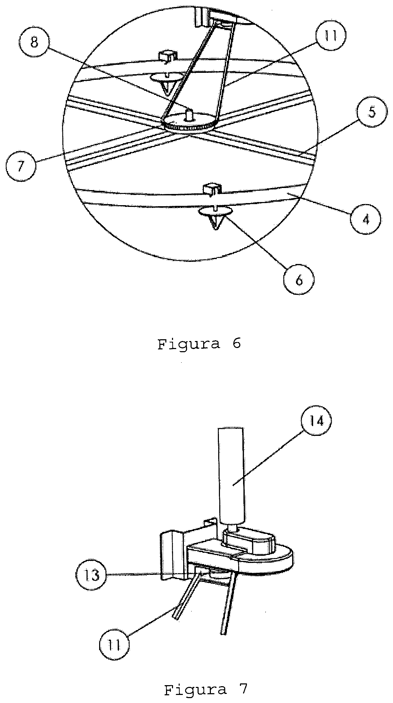

Figs. 3, 4 and 6 show that the rotating system comprises the chassis (2) of a cabin and an actuating mechanism (12) positioned in one of the chassis (2) corners, and which is connected to a central sprocket (7) by a transmission chain (11). At the centre of the cabin's chassis (2) and in its lower part, there is a round flange (9) containing a cap (10) fitted on a pivot pin or axle (8) fixed at the centre of the tubular round base (4) or at the crossing point of its stabilising blocking bars (5), which serve as a rotating axle for the entire chassis (2) and which rotates using the set of wheels on the tubular round base (4), which is supported on the ground by a set of telescopic flanged spurs (6).

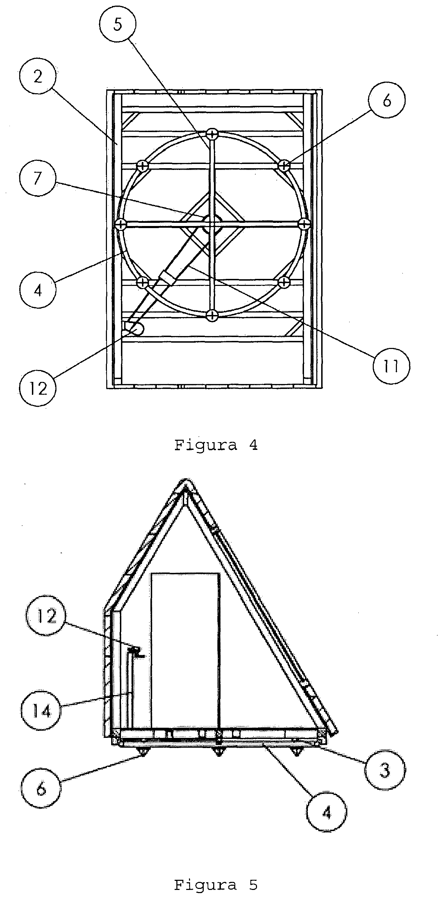

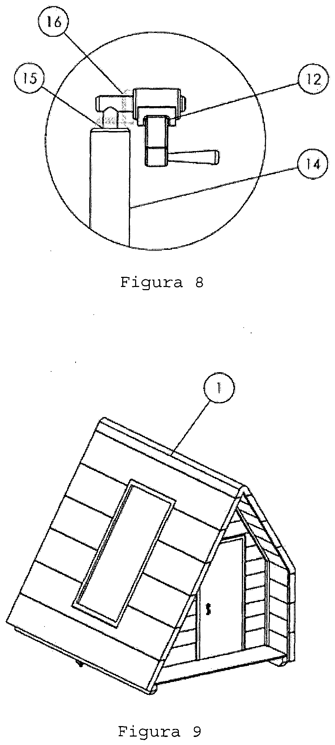

Figs. 5, 7 and 8 show the actuating mechanism (12), fitted and positioned in one of the chassis (2) corners, comprising one smaller sprocket (13) connected to a vertical axle (14) acting as a pivot which, in its upper end has a horizontal bevel gear (15) connected to another vertical bevel gear (16) which movement can be activated either manually or differently. This movement actuates the smaller sprocket (13), which conveys the movement to the cabin's chassis (2) using a transmission chain (11) connected, at the other end, to the central sprocket (7), rotating the entire cabin's chassis (2) on the pivot pin or axle (8) serving as an axis of rotation.

The present invention is particularly useful in the production of cabins for tourist accommodation.

As will be clear to those skilled in the art, the present invention is not limited to the embodiments disclosed here, and other possible changes will be deemed to be within the scope of the invention.

Of course, the preferred embodiments above can be combined in different shapes and forms, and we avoid repeating the wide range of combinations.

The invention should only be limited by the scope of the following claims.

## Claims

1. A cabin which rotates in 360 degrees along one plane and in every direction, comprising:
- one chassis (2);
- one cabin structure (1) mechanically coupled to the chassis (2) surface;
- one round base (4);
- means of connection, mechanically coupled to the centre of the lower surface of the chassis (2);
- actuating means, suitable for moving the chassis (2) on the round base (4);
- one intermediate round structure with rotatable means (3) and that is mechanically coupled to the lower surface of the chassis (2), further having the same diameter as, and being centred on, the round base (4), wherein
the means of connection are fitted on the actuating means, **characterized in that** the actuating means comprise:
- one pivot pin or axle (8) arranged vertically, suitable for being fitted in the connection means and serving as an axle;
- one central sprocket (7), in which the pivot pin or axle (8) is attached, centred on the round base (4) and attached to it;
- locking bars (5) fixed on the round base (4), in which the central sprocket (7) is fixed.

2. A rotating cabin according to the previous claim, wherein the connection means comprise one round flange (9) with a cap (10), and wherein the cap (10) is fixed on the centre of the lower surface of the round flange (9).

3. A rotating cabin according to any one of the preceding claims, wherein the actuating means for the rotating movement additionally comprise:
- one smaller sprocket (13);
- one transmission chain (11) with one end connected to the central sprocket (7) and the other end connected to the smaller sprocket (13);
- one vertical axle (14) mechanically connected to the smaller sprocket (13).

4. A rotating cabin according to the previous claim, wherein the vertical axle (14) connected to the smaller sprocket (13) has, in its upper end, a vertical bevel gear (15) coupled to another horizontal bevel gear (16), which in turn is connected to an actuating means (12) which can either be manual or automatic.

5. A rotating cabin according to any preceding claims, wherein it has a plurality of telescopic flanged spurs (6) suitable for support and fixation on the ground, mechanically connected to the round base (4).

6. A rotating cabin according to the previous claim, wherein the telescopic flanged spurs (6) are evenly spaced along the round base (4).

7. A rotating cabin according to any of the preceding claims, wherein the rotatable means (3) consist of a plurality of evenly spaced wheels.

8. A rotating cabin according to any of the preceding claims, wherein the round base (4) is a tubular base.

9. A rotating cabin according to any of the preceding claims, wherein the actuating means are arranged on the chassis (2).

10. A rotating cabin according to the previous claim, wherein the cabin's structure (1) consists of a shelter, a residential caravan, a mobile home, a tiny house, a small modular house or a retreat.

11. Use of a rotating cabin according to any of the preceding claims in shelters, residential caravans, mobile homes, tiny houses, small modular houses or retreats.

## Patentansprüche

1. Eine Kabine, welche sich um 360 Grad entlang einer Fläche und in jede Richtung dreht, welche folgendes umfasst:
- ein Chassis (2);
- eine Kabinenstruktur (1), die mechanisch an die Oberfläche des Chassis (2) gekoppelt ist;
- eine runde Basis (4);
- Verbindungsmittel, welche mechanisch an das Zentrum der Unterfläche des Chassis (2) gekoppelt sind;
- Betätigungsmittel, geeignet, um das Chassis (2) auf der runden Basis (4) zu bewegen;
- eine mittlere runde Struktur mit drehbaren Mitteln (3) und welche mechanisch an die Unterfläche des Chassis (2) gekoppelt ist, weiterhin weist sie den selben Durchmesser auf wie und liegt zentriert auf der runden Basis (4), worin
die Verbindungsmittel an den Betätigungsmitteln montiert sind, **dadurch gekennzeichnet, dass** die Betätigungsmittel folgendes umfassen:
- ein Drehzapfen oder Schwenkachse (8) senkrecht angeordnet, geeignet, um an die Verbindungsmittel montiert zu werden und als eine Achse dient;
- ein zentrales Kettenrad (7), an welches der Drehzapfen oder Schwenkachse (8) befestigt ist, auf der runden Basis (4) zentriert und an ihr befestigt;
- Verriegelungsstangen (5), die an die runde Basis (4) fixiert sind, an der das zentrale Kettenrad fixiert ist.

2. Eine drehbare Kabine nach dem vorhergehenden Anspruch, worin die Verbindungsmittel einen runden Flansch (9) mit einem Deckel (10) umfassen, und worin der Deckel (10) in der Mitte der Unterfläche des runden Flansches (9) befestigt ist.

3. Eine drehbare Kabine nach jedem der vorhergehenden Ansprüche, worin die Betätigungsmittel für die Drehbewegung zusätzlich folgendes umfassen:
- ein kleineres Kettenrad (13);
- eine Übertragungskette (11), bei der ein Ende an das zentrale Kettenrad (7) und das andere Ende an das kleinere Kettenrad (13) verbunden ist;
- eine Vertikalachse (14), die mechanisch zu dem kleineren Kettenrad (13) verbunden ist.

4. Eine drehbare Kabine nach vorhergehendem Anspruch, worin die Vertikalachse (14), die mit dem kleineren Kettenrad (13) verbunden ist, an ihrem oberen Ende, ein vertikales Kegelradgetriebe (15) aufweist, welches zu einem anderen horizontalen Kegelradgetriebe (16), gekoppelt ist, welches wiederum zu einem Betätigungsmittel (12), welches manuell oder automatisch betätigt werden kann, verbunden ist.

5. Eine drehbare Kabine nach jeden vorhergehenden Ansprüchen, worin es eine Vielzahl von teleskopischen geflanschten Spornen (6) hat, geeignet für Stützung und Befestigung am Boden, die mechanisch zu der runden Basis (4) verbunden sind.

6. Eine drehbare Kabine nach dem vorhergehenden Anspruch, worin die teleskopischen geflanschten Spornen (6) gleichmäßig entlang der runden Basis (4) verteilt sind.

7. Eine drehbare Kabine nach jeden vorhergehenden Ansprüchen, worin die drehbaren Mittel (3) aus einer Vielzahl von gleichmäßig verteilten Rädern bestehen.

8. Eine drehbare Kabine nach jeden vorhergehenden Ansprüchen, worin die runde Basis (4) eine rohrförmige Basis ist.

9. Eine drehbare Kabine nach jeden vorhergehenden Ansprüchen, worin die Betätigungsmittel auf dem Chassis (2) angeordnet sind.

10. Eine drehbare Kabine nach dem vorhergehenden Anspruch, worin die Kabinenstruktur (1) aus einem Unterstand, einem Wohnwagen, einem Wohnmobil, einem winzigen Haus, einem Modulhäuschen oder einem Refugium besteht.

11. Nutzung einer drehbaren Kabine nach jedem der vorhergehenden Ansprüche in Unterständen, Wohnwägen, Wohnmobilen, winzigen Häusern, Modulhäuschen oder Refugiums.

## Revendications

1. Une cabane rotative à 360 degrés selon un plan et dans n'importe quel sens, comprenant :
- un châssis (2) ;
- une structure de cabane (1) mécaniquement accouplée à la surface du châssis (2) ;
- une base circulaire (4) ;
- des moyens de liaison couplés mécaniquement au centre de la surface inférieure du châssis (2) ;
- des moyens d'actionnement appropriés pour déplacer le châssis (2) sur la base circulaire (4) ;
- une structure circulaire intermédiaire avec des moyens rotatifs (3) qui est couplée mécaniquement à la surface inférieure du châssis (2), ayant en outre le même diamètre que et étant centrée sur la base circulaire (4), où
les moyens de liaison sont montés sur les moyens d'actionnement, **caractérisée en ce que** les moyens d'actionnement comportent :
- un pivot ou axe (8) disposé verticalement, apte à être monté sur les moyens de liaison et servant d'axe ;
- un pignon central (7), dans lequel le pivot ou l'axe (8) est fixé, centré avec la base circulaire (4) et relié à celle-ci ;
- des barres de verrouillage (5) fixées à la base circulaire (4), sur lesquelles le pignon central (7) est attaché.

2. Une cabane rotative selon la revendication précédente, où les moyens de liaison comportent une bride ronde (9) avec un capuchon (10), et où le capuchon est fixé au centre de la surface inférieure de la bride ronde (9).

3. Une cabane rotative selon l'une quelconque des revendications précédentes, où les moyens d'actionnement du mouvement de rotation comportent en outre :
- un pignon plus petit (13) ;
- une chaîne de transmission (11) ayant une extrémité reliée au pignon central (7) et l'autre extrémité reliée au pignon plus petit (13) ;
- un axe vertical (14) relié mécaniquement au pignon plus petit (13).

4. Une cabane rotative selon la revendication précédente, où l'axe vertical (14) relié au pignon plus petit (13) comporte, à son extrémité supérieure, un engrenage conique vertical (15) couplé à un autre engrenage conique horizontal (16), qui à son tour est relié à un mécanisme d'actionnement (12) qui peut être manuel ou automatique.

5. Une cabane rotative selon l'une quelconque des revendications précédentes, présentant une pluralité d'ergots téléscopiques à rebords (6) appropriés pour être appuyés et fixés sur le sol, reliés mécaniquement à la base circulaire (4).

6. Une cabane rotative selon la revendication précédente, où les ergots téléscopiques à rebords(6) sont régulièrement espacés le long de la base circulaire (4).

7. Une cabane rotative selon l'une quelconque des revendications précédentes, où les moyens rotatifs (3) consistent en une pluralité de roues régulièrement espacées.

8. Une cabane rotative selon l'une quelconque des revendications précédentes, où la base circulaire (4) est une base tubulaire.

9. Une cabane rotative selon l'une quelconque des revendications précédentes, où les moyens d'actionnement sont disposés sur le châssis (2).

10. Une cabane rotative selon la revendication précédente, où la structure de la cabane (1) consiste en un abri, une caravane résidentielle, une maison mobile, une mini-maison, une petite maison modulaire ou un refuge.

11. Utilisation d'une cabane rotative selon l'une quelconque des revendications précédentes dans des abris, caravanes résidentielles, maisons mobiles, mini-maisons, petites maisons modulaires ou refuges.
